# EUROPÄISCHE PATENTANMELDUNG

(11) **EP 2 436 548 A1**
(43) Veröffentlichungstag der Anmeldung: **04.04.2012**
(21) Anmeldenummer: 11183112.9
(22) Anmeldetag: 28.09.2011
(51) Int. Cl.: B60K 15/04, B60K 15/05, B60K 15/03, B60R 25/04, B60R 25/00

(54) **Sicherheitsvorrichtung für ein betankbares Fahrzeug**

(30) Priorität: 01.10.2010 DE 102010041861
(71) Anmelder: Jungheinrich Aktiengesellschaft, 22047 Hamburg (DE)
(72) Erfinder: Krause, Jörg, 84032 Altdorf (DE); Kronthaler, Peter, 85413 Hörgertshausen (DE); Rathspieler, Martin, 85368 Volksmanndorf (DE)
(74) Vertreter: Tiesmeyer, Johannes

(57) **Zusammenfassung**

Sicherheitsvorrichtung für ein betankbares Fahrzeug, insbesondere für ein Flurförderzeug mit Verbrennungsmotor, umfasst einen Tank (2) mit einem Anschlussmittel (10) für eine bei einem Betankungsvorgang das Tankgut zuführende Betankungsleitung (12), eine den Anschlusszustand des Anschlussmittels (10) überwachende Sensoreinrichtung und eine mit der Sensoreinrichtung kommunizierende Wegfahrsperreinrichtung, die dazu ausgestaltet ist, das Fahrzeug an der Weiterfahrt zu hindern, solange die Sensoreinrichtung den Anschlusszustand: "Betankungsleitung angeschlossen" indiziert.

## Beschreibung

Die vorliegende Erfindung betrifft eine Sicherheitsvorrichtung für ein betankbares Fahrzeug, insbesondere für ein Flurförderzeug mit Verbrennungsmotor.

Bei der Befüllung von Fahrzeugtanks ist es oft notwendig, die das Tankgut zuführende Betankungsleitung fest mit dem Tank während des Betankungsvorgangs zu verbinden. Dieses Erfordernis besteht insbesondere bei der Betankung mit Flüssiggas, da hier sowohl der Fahrzeugtank als auch der Vorratstank unter Druck stehen. Hierbei besteht allerdings die Gefahr, dass die Betankungsleitung nach Beendigung des Tankvorgangs versehentlich nicht wieder entfernt wird, wodurch diese bei der Weiterfahrt des Fahrzeugs abreißen kann, so dass Tankgut entweicht. Hierdurch besteht die Gefahr einer erheblichen Umweltschädigung und insbesondere bei unter Druck stehenden flüssigen Gasen zusätzlich Explosionsgefahr.

Es ist daher Aufgabe der vorliegenden Erfindung, eine zuverlässige Sicherheitsvorrichtung vorzusehen, mittels welcher die vorstehend erwähnte Gefahr des unbeabsichtigten Abreißens der Betankungsleitung zu beseitigen ist.

Erfindungsgemäß wird diese Aufgabe gelöst durch eine Sicherheitsvorrichtung für ein betankbares Fahrzeug, insbesondere für ein Flurförderzeug mit Verbrennungsmotor, umfassend einen Tank mit einem Anschlussmittel für eine bei einem Betankungsvorgang das Tankgut zuführende Betankungsleitung, eine den Anschlusszustand des Anschlussmittels überwachende Sensoreinrichtung und eine mit der Sensoreinrichtung kommunizierende Wegfahrsperreinrichtung, die dazu ausgestaltet ist, das Fahrzeug an der Weiterfahrt zu hindern, solange die Sensoreinrichtung den Anschlusszustand: "Betankungsleitung angeschlossen" indiziert.

Eine derartige Sicherheitsvorrichtung überwacht den Anschlusszustand des Anschlussmittels auf direkte oder indirekte Weise dahingehend, ob bestimmte Bedingungen für den Anschluss der Betankungsleitung an dem Anschlussmittel erfüllt sind. Sind diese Bedingungen erfüllt, so wird der Anschlusszustand "Betankungsleitung angeschlossen" angenommen, wobei die Sensoreinrichtung in diesem Fall ein entsprechendes Signal für die Wegfahrsperreinrichtung bereitstellt. Hierbei wird es sich um ein elektrisches Signal handeln, welches von einer Steuereinrichtung der Wegfahrsperreinrichtung verarbeitet wird. Die Wegfahrsperreinrichtung unterbindet bei Vorliegen des Anschlusszustandes "Betankungsleitung angeschlossen" die Weiterfahrt des Fahrzeugs, etwa indem sie das Anlassen des Motors oder das Einlegen eines Gangs verhindert. Durch ein derartiges aktives Eingreifen kann mit der vorliegenden Sicherheitsvorrichtung daher eine Beschädigung der Tankleitung durch eine Weiterfahrt des Fahrzeugs im Prinzip ausgeschlossen werden.

Beispielsweise kann der Aufbau derart gestaltet sein, dass das Anschlussmittel ein Schutzgehäuse mit einem in einer Schließposition das Schutzgehäuse verschließenden Verschlussdeckel aufweist, der zur Freigabe des Anschlussmittels für den Anschluss einer Betankungsleitung aus einer Schließposition entfernbar ist, und wobei die Sensoreinrichtung dazu ausgestaltet ist, das Vorhandensein des Verschlussdeckels in der Schließposition zu überwachen. Hierbei kann in einer bevorzugten Ausgestaltung vorgesehen sein, dass das Schutzgehäuse einen das Anschlussmittel umgebenden Schutzkragen aufweist, auf den der Verschlussdeckel aufsteckbar oder über eine Führungsvorrichtung in die Schließposition überführbar ist. Eine derartige Führungsvorrichtung kann beispielsweise als Scharnier ausgeführt sein, wodurch sich das Öffnen und Schließen des Schutzgehäuses wesentlich vereinfachen.

Weiter kann vorgesehen sein, dass die Sensoreinrichtung dazu ausgestaltet ist, das Vorhandensein des Verschlussdeckels in der Schließposition zu erkennen. Hierbei geht die Sicherheitsvorrichtung davon aus, dass sobald der Verschlussdeckel entfernt ist, der Anschlusszustand "Betankungsleitung angeschlossen" vorliegt, so dass in diesem Fall eine Weiterfahrt mittels einer Wegfahrsperreinrichtung verhindert wird.

Bei einer weiteren vorteilhaften Ausgestaltungsform kann vorgesehen sein, dass das Anschlussmittel des Tanks eine Eingriffsformation aufweist, die mit einer komplementären Eingriffsformation der Betankungsleitung in formschlüssigen Verschlusseingriff bringbar ist, wobei die Sensoreinrichtung dazu ausgestaltet ist, den Zustand des gegenseitigen Eingriffs der Eingriffsformationen zu überwachen. Dabei können das Anschlussmittel des Tanks und die Betankungsleitung mit einem Bajonett- oder Schraubverschluss versehen sein, um eine feste und dichte Verbindung zwischen dem Anschlussmittel und der Betankungsleitung während des Tankvorgangs gewährleisten zu können, was für einen Tank, der als Flüssiggastank ausgeführt sein kann, von großer Bedeutung ist. Des Weiteren muss berücksichtigt werden, dass im Hinblick auf eine Explosionsgefahr bei der Betankung mit Flüssiggas, die Sensoreinrichtung so ausgestaltet sein muss, dass eine Funkenentwicklung in der Nähe des Anschlussmittels vermieden wird.

Die Sensoreinrichtung kann bei Verwendung eines Schutzgehäuses so vorgesehen sein, dass sie einen mechanischen Schalter aufweist, der von dem Verschlussdeckel beim Übergang in dessen Schließposition beaufschlagbar und so in einen Schaltzustand überführbar ist, der den Anschlusszustand: "Betankungsleitung nicht angeschlossen" des Anschlussmittels indiziert.

Um eine Funkenentwicklung innerhalb des Schutzgehäuses zu vermeiden, kann hierbei ein elektrischer Schalter auf der Außenseite des Schutzgehäuses vorgesehen sein, der durch Beaufschlagung des mechanischen Schalters in einen Schaltzustand überführt wird, um dadurch ein Freigabesignal an die Wegfahrsperreinrichtung zu übermitteln, entsprechend einer nicht angeschlossenen Betankungsleitung.

Bei einer weiteren vorteilhaften Ausgestaltung kann vorgesehen sein, dass die Sensoreinrichtung eine optische Sensoreinrichtung ist, die dazu angepasst ist, den Deckel oder/und das Anschlussmittel zu überwachen. Eine derartige Messanordnung ist frei von mechanisch beanspruchten und verschleißanfälligen Bauteilen. Dies führt zu einer wartungsarmen und kostengünstigen Sensoreinrichtung. Dabei kann die Sensoreinrichtung eine Lichtschranke umfassen, die bei angeschlossener Betankungsleitung unterbrochen wird. Alternativ kann die Sensoreinrichtung einen bildgebenden Sensor umfassen. Dieser kann als Kamera ausgeführt sein, die das Anschlussmittel überwacht und beispielsweise über eine Bilderkennungssoftware eine angeschlossene Betankungsleitung erkennt. Im Falle des Vorhandenseins eines Schutzgehäuses kann in entsprechender Weise auch dessen Verschlusszustand optisch überwacht werden.

Weiterbildend wird vorgeschlagen, dass bei der Ausführungsform mit Schutzgehäuse die Sensoreinrichtung einen elektrischen Schalter umfasst, der dazu ausgestaltet ist, den Deckel zu überwachen, wobei im Hinblick auf eine mögliche Funkenentwicklung dieser Schalter vorzugsweise außerhalb des Schutzgehäuses vorgesehen sein sollte. Dieser Schalter kann beispielsweise als ein Druckschalter ausgeführt sein, der durch einen entsprechend ausgestalteten Deckel beim Übergang in dessen Schließposition beaufschlagbar und dadurch in einen Schaltzustand überführbar ist.

Gegenstand der Erfindung ist auch ein Flurförderzeug mit einem Verbrennungsmotor, einem Treibstofftank, insbesondere Flüssiggastank und einer Sicherheitsvorrichtung nach einem der Ansprüche 1 bis 13.

Die Erfindung wird nachfolgend unter Bezugnahme auf die anliegenden Figuren näher beschrieben.
- Fig. 1: zeigt eine schematische Perspektivansicht eines Tanks mit einem geschlossenen Schutzgehäuse.
- Fig. 2: stellt eine schematische Perspektivansicht eines Tanks der in Fig. 1 gezeigten Bauform dar mit geöffnetem Schutzgehäuse, einer angeschlossenen Betankungsleitung und einer einen beaufschlagbaren mechanischen Schalter umfassende Sensoreinrichtung.
- Fig. 3: zeigt eine schematische Perspektivansicht eines Tanks mit einem offenen Schutzgehäuse und einer optischen, als Lichtschranke ausgeführte Sensoreinrichtung.
- Fig. 4: zeigt eine schematische Perspektivansicht eines Tanks mit einem offenen Schutzgehäuse, einer angeschlossenen Betankungsleitung und einer optischen als bildgebender Sensor ausgeführte Sensoreinrichtung.
- Fig. 5: zeigt eine schematische Perspektivansicht eines Tanks mit einem offenen Schutzgehäuse, einer angeschlossenen Betankungsleitung und einer einen beaufschlagbaren elektrischen Schalter umfassende Sensoreinrichtung.

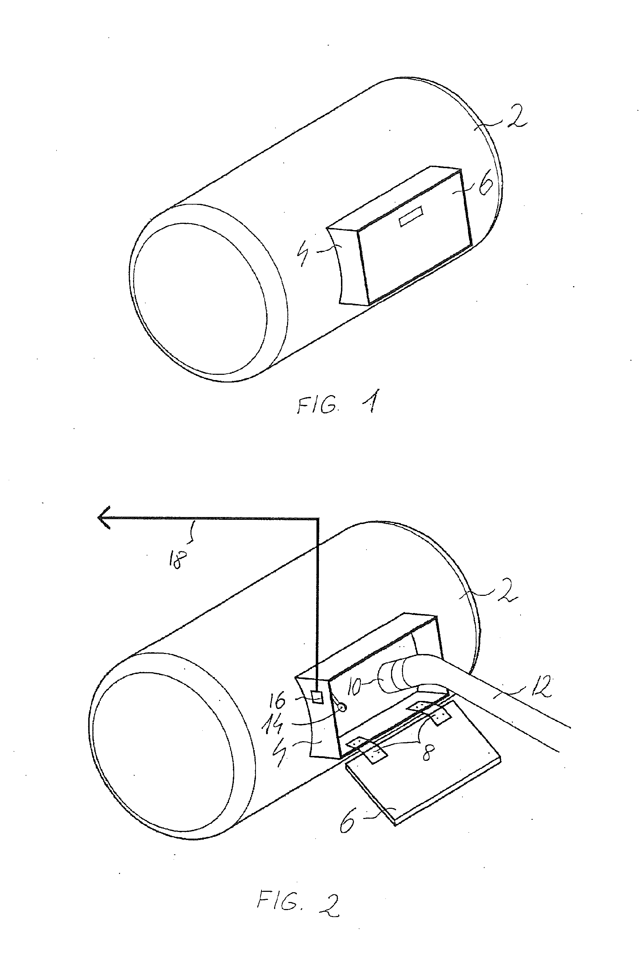

In Fig. 1 ist ein Tank 2 in einer Perspektivansicht dargestellt. An diesem Tank 2 ist in dieser Ausführungsform ein Schutzgehäuse vorgesehen, welches einen Schutzkragen 4 und einen Verschlussdeckel 6 umfasst, der, wie in Fig. 2-5 dargestellt, an Scharnieren 8 geführt auf den Schutzkragen 4 in eine Schießposition überführbar ist.

Durch Verschließen des Schutzgehäuses wird ein vom Schutzkragen 4 umgebendendes Anschlussmittel 10 (Fig. 2-5) abgedeckt, so dass im geschlossenen Zustand des Schutzgehäuses prizipiell keine Betankungsleitung 12 an dem Anschlussmittel 10 angeschlossen sein kann.

Um den Verschlussdeckel 6 in seiner Schließposition zu erkennen, was einer nicht angeschlossenen Betankungsleitung 12 entspricht, ist in dem in

Fig. 2 dargestellten Ausführungsbeispiel ein beim Übergang des Verschlussdeckels 6 in dessen Schließposition beaufschlagbarer mechanischer Schalter 14 vorgesehen, der dadurch in einen Schaltzustand überführbar ist. Hier erweist es sich hinsichtlich der Vermeidung einer Funkenentwicklung innerhalb des Schutzgehäuses als vorteilhaft, einen elektrischen Schalter 16 außerhalb des Schutzkragens 4 vorzusehen, der durch Beaufschlagung des mechanischen Schalters 14 in einen Schaltzustand überführbar ist. Dadurch kann über eine Datenleitung 18 der geschlossene Zustand des Verschlussdeckels 6 an eine Steuereinheit einer Wegfahrsperreinrichtung (nicht gezeigt) zur Freigabe der Wegfahrsperre übermittelt werden.

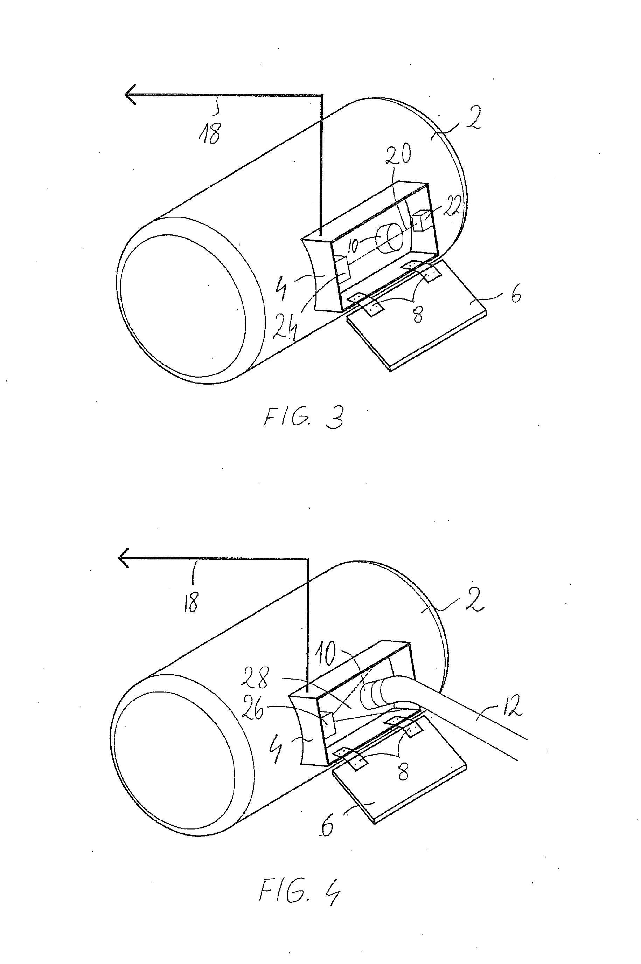

Bei den in Fig. 3-4 dargestellten Ausführungsformen, wird das Anschlussmittel 10 mit Hilfe von optischen Sensoreinrichtungen direkt auf eine angeschlossene Betankungsleitung 12 überwacht.

Dabei wird bei dem in Fig. 3 dargestellten Ausführungsbeispiel eine Lichtschranke 20 zwischen einer Lichtquelle 22 und einem Fotosensor 24 so aufgebaut, dass die Lichtschranke 20 bei angeschlossener Betankungsleitung unterbrochen ist.

In der in Fig. 4 gezeigten Ausführungsform wird das Anschlussmittel 10 mit Hilfe eines bildgebenden Sensors 26 auf eine angeschlossene Betankungsleitung 12 überwacht. Hierbei kann mit einer Kamera und beispielsweise einer Bilderkennungssoftware auf einfache Weise das Vorhandensein der Betankungsleitung im Sichtfeld 28 der Kamera erkannt werden.

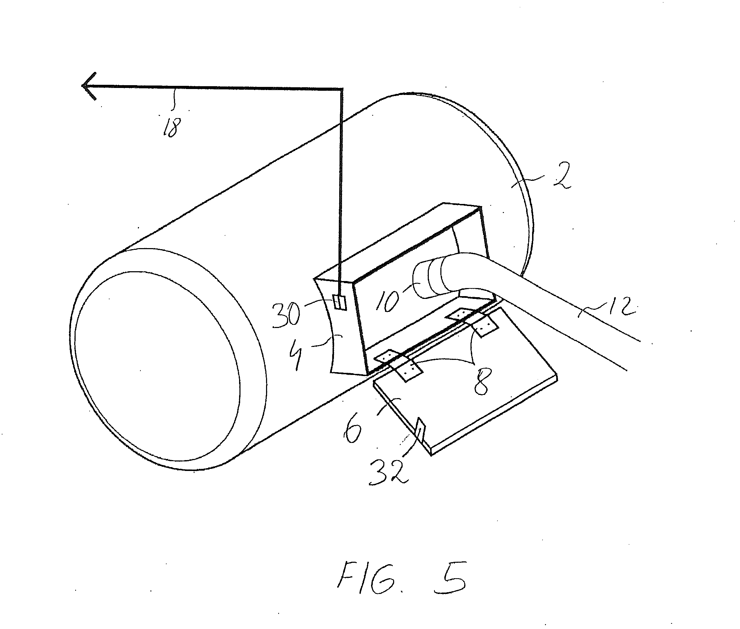

Bei einer gegenüber den in Fig. 1-4 dargestellten Ausführungsformen abgewandelten Form des Verschlussdeckels 6 kann das Vorhandensein des Verschlussdeckels 6 in seiner Schließposition durch einen außerhalb des Schutzgehäuses angebrachten elektrischen Schalter 30 erkannt werden. Wie in Fig. 5 gezeigt, weist der Verschlussdeckel 6 einen Fortsatz 32 auf, der in der Schließposition des Verschlussdeckels 6 den elektrischen Schalter 30 beaufschlagen und ihn dadurch in einen Schaltzustand überführen kann.

## Patentansprüche

1. Sicherheitsvorrichtung für ein betankbares Fahrzeug, insbesondere für ein Flurförderzeug mit Verbrennungsmotor, umfassend:
einen Tank (2) mit einem Anschlussmittel (10) für eine bei einem Betankungsvorgang das Tankgut zuführende Betankungsleitung (12),
eine den Anschlusszustand des Anschlussmittels (10) überwachende Sensoreinrichtung und eine mit der Sensoreinrichtung kommunizierende Wegfahrsperreinrichtung, die dazu ausgestaltet ist, das Fahrzeug an der Weiterfahrt zu hindern, solange die Sensoreinrichtung den Anschlusszustand: "Betankungsleitung angeschlossen" indiziert.

2. Sicherheitsvorrichtung nach Anspruch 1, wobei das Anschlussmittel (10) ein Schutzgehäuse mit einem in einer Schließposition das Schutzgehäuse verschließenden Verschlussdeckel (6) aufweist, der zur Freigabe des Anschlussmittels (10) für den Anschluss einer Betankungsleitung (12) aus einer Schließposition entfernbar ist, und wobei die Sensoreinrichtung dazu ausgestaltet ist, das Vorhandensein des Verschlussdeckels (6) in der Schließposition zu überwachen.

3. Sicherheitsvorrichtung nach Anspruch 2, **dadurch gekennzeichnet, dass** das Schutzgehäuse einen das Anschlussmittel (10) umgebenden Schutzkragen (4) aufweist, auf den der Verschlussdeckel (6) aufsteckbar oder über eine Führungsvorrichtung (8) in die Schließposition überführbar ist.

4. Sicherheitsvorrichtung nach einem der Ansprüche 2 bis 3, **dadurch gekennzeichnet, dass** die Sensoreinrichtung dazu ausgestalt ist, das Vorhandensein des Verschlussdeckels (6) in der Schließposition zu erkennen.

5. Sicherheitsvorrichtung nach einem der vorhergehenden Ansprüche, **dadurch gekennzeichnet, dass** das Anschlussmittel (10) des Tanks (2) eine Eingriffsformation aufweist, die mit einer komplementären Eingriffsformation der Betankungsleitung (12) in formschlüssigen Verschlusseingriff bringbar ist, wobei die Sensoreinrichtung dazu ausgestaltet ist, den Zustand des gegenseitigen Eingriffs der Eingriffsformationen zu überwachen.

6. Sicherheitsvorrichtung nach einem der vorhergehenden Ansprüche, **dadurch gekennzeichnet, dass** der Tank (2) ein Flüssiggastank ist.

7. Sicherheitsvorrichtung nach einem der Ansprüche 2 bis 6, **dadurch gekennzeichnet, dass** die Sensoreinrichtung einen mechanischen Schalter (14) aufweist, der von dem Verschlussdeckel (6) beim Übergang in dessen Schließposition beaufschlagbar und so in einen Schaltzustand überführbar ist, der den Anschlusszustand: "Betankungsleitung nicht angeschlossen" des Anschlussmittels (10) indiziert.

8. Sicherheitsvorrichtung nach Anspruch 7, **dadurch gekennzeichnet, dass** der mechanische Schalter (14) durch Beaufschlagung einen elektrischen Schalter (16) außerhalb des Schutzgehäuses in einen Schaltzustand überführt.

9. Sicherheitsvorrichtung nach einem der Ansprüche 2 bis 6, **dadurch gekennzeichnet, dass** die Sensoreinrichtung eine optische Sensoreinrichtung ist, die dazu ausgestaltet ist den Deckel (6) oder/und das Anschlussmittel (10) zu überwachen.

10. Sicherheitsvorrichtung nach Anspruch 9, **dadurch gekennzeichnet, dass** die optische Sensoreinrichtung eine Lichtschranke (20) aufweist.

11. Sicherheitsvorrichtung nach Anspruch 9, **dadurch gekennzeichnet, dass** die optische Sensoreinrichtung einen bildgebenden Sensor (26) umfasst.

12. Sicherheitsvorrichtung nach einem der Ansprüche 2 bis 6, **dadurch gekennzeichnet, dass** die Sensoreinrichtung einen elektrischen Schalter (30) aufweist, der dazu ausgestaltet ist, den Deckel (6) zu überwachen.

13. Sicherheitsvorrichtung nach Anspruch 12, **dadurch gekennzeichnet, dass** der elektrische Schalter (30) außerhalb des Schutzgehäuses vorgesehen ist.

14. Flurförderzeug mit Verbrennungsmotor und einer Sicherheitsvorrichtung nach einem der oberen Ansprüche.
